# EUROPEAN PATENT APPLICATION

(11) **EP 3 316 542 A1**
(43) Date of publication of application: **02.05.2018**
(21) Application number: 16195619.8
(22) Date of filing: 25.10.2016
(51) Int. Cl.: H04L 29/06, H04L 12/18

(54) **DYNAMIC SECURITY LEVEL ASSESSMENT**

(71) Applicant: Nagravision SA, 1033 Cheseaux-sur-Lausanne (CH)
(72) Inventor: MELIA, Telemaco, 1033 Cheseaux-sur-Lausanne (CH); LE BUHAN, Corinne, 1033 Cheseaux-sur-Lausanne (CH); GRUBER, Stéphane, 1033 Cheseaux-sur-Lausanne (CH)
(74) Representative: Korenberg, Alexander Tal

(57) **Abstract**

In overview, a method of monitoring security of a communication on a network comprises receiving contextual information regarding each of a plurality of user devices, each user device associated with a respective participant in the communication, analysing the received information to define a security level for each user device of the plurality of user devices, comparing the defined security level to a threshold security level, and performing an action in response to determining that the defined security level of one or more user devices of the plurality of user devices does not meet the threshold security level.

## Description

### FIELD

The present disclosure relates to security of communications over communications networks, for example cellular networks such as Long-Term Evolution (LTE), specifically although not exclusively voice communications networks such as Voice over LTE (VoLTE).

### BACKGROUND

Cellular network operators are increasingly deploying LTE networks more and more, in which the cell granularity is much finer than in previous 2G or 3G networks, so that relying upon the physical security of the telecommunication infrastructure may no longer be adequate. Voice will also be transferred onto LTE in the next few years, which raises the issue of securing voice streams in the LTE infrastructure. Of course, this is also a concern for communications, in particular voice communications, over any non-physically secure network, for example internet protocol (IP) or other packet switching networks.

In standard LTE applications, Internet Protocol Security (IPSEC) is the primary solution for establishing secure tunnels between the end cell node (eNodeB) and the core of the operator network infrastructure or Evolved Packet Core (EPC), at least for voice services. This service is comprised of a control plane, where signalling messages are encrypted, and a data plane, where data messages carrying the voice stream in the VoLTE applications are also encrypted in most advanced deployments. Between the end device and the eNodeB, over the air encryption based on the international mobile subscriber identity (IMSI) securely stored in the Universal Subscriber Identity Module (USIM) is used, for example as specified in 3G.

In more advanced applications, a further virtual private network (VPN) solution (e.g. Verizon Voice Cypher) may be applied end-to-end between two devices, so that data messages carrying the voice stream (or other data messages) can only be decrypted by an authenticated connected user. To deploy an end-to-end solution, a secure root of trust is needed, which may be based on the USIM or a separate hardware chip for applications where the USIM does not provide sufficient trust.

### BRIEF DESCRIPTION OF THE DRAWINGS

FIG.1 shows a system for communications over an LTE network;
FIG.2 shows data framework for communications on the LTE network;
FIG.3 shows a method in which the security level of a group call is determined;
FIG.4 shows an example of the evolution of a group call in line with the method of Figure 3;
FIG.5 shows another example of the evolution of a group call;
FIG.6 shows another example of the evolution of a group call;
FIG.7 shows a block diagram of one implementation of a computing device.

Some specific embodiments are now described by way of illustration with reference to the accompanying drawings in which like reference numerals refer to like features.

### DETAILED DESCRIPTION OF THE DRAWINGS

In overview, a method of ensuring security of a communication on a network comprises receiving contextual information regarding each of a plurality of user devices, analysing the received information to define a security level of each user device, comparing the defined security level to a threshold security level and performing an action in response to identifying that the defined security level of one or more of the user devices is below the threshold security level.

The method may use real time information regarding participants in the call and their devices to assess their security level and ascertain whether a certain participant has a security level lower than that required for a communication to be trusted. This allows actions to be taken accordingly that ensure the communication is not compromised.

The communication may involve three or more participants. Whilst some solutions for call security have focused on point-to-point security, there is a need to also address group security, for instance for group calling and/or conferencing.

Information may be received at a plurality of time instances over the duration of the communication. The received information may be analysed at each respective time instance of the plurality of time instances. In contrast to existing root of trust approaches, which are primarily static (based on securely stored keys), the dynamic nature of the disclosed method may better accommodate the threats associated with the dynamics of groups involved in point-to-point and group communications in different, evolving contexts at different times.

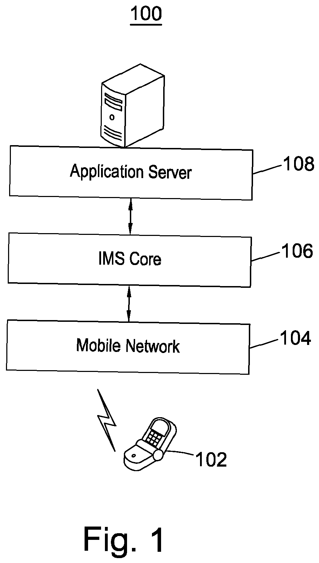

Figure 1 illustrates a system 100 for communications over an LTE network, comprising a user device 102, a mobile network 104, an IP Multimedia Subsystem (IMS) core network 106 and an application server 108. User devices may be mobile telephones, tablets, PDAs, laptops In the case of a group or conference call, there may be a plurality of user devices 102. The user device 102 connects to the mobile network 104 when a call is made. Alternatively, the user device 102 may connect to other networks, such as Wi-Fi or voice over internet protocol (VoIP), to make a call. The IMS 106 is used with specific profiles for control and media planes of voice service on LTE during the call. This results in the voice service being delivered as data flows within the LTE data bearer in the mobile network 104. In this case, the application server 108 acts as a session initiation protocol (SIP) server and receives information from the user device 102 about its context. This could be under public coverage, such as an airport or café Wi-Fi network or a wireless mobile network carrier, an under-dedicated network such as an LTE network for first responders or other mobile and satellite network, a non-trusted environment, an office network and the like.

The application server 108 is configured to determine the security level of the user device 102 based on the actual environment of the user device 102 and its context. When a user connects to the system or places a call, the application server 108 receives information on various parameters related to the user device 102 and the user using the device. The application server 108 will then use these parameters to output a trust score for the user device 102 and for the communication as a whole. In the case of a group call, the application server 108 will to output a trust score for each participant in the group call.

The trust score is used to define a security level for the user device 102 and for the communication. The security level of the user device 102 defines a level of authorization for the user device 102. Different security level are associated with a participant, for example restricted, basic, premium, silver, gold, platinum, etc. A minimum threshold for individual parameter values or for a sum or other combination of parameter values may be required for a given level of security. At the time a group communication is setup, the communication as a whole can only be granted the security level of the lowest rated security level of the various security levels of the participants.

The security level of each user device 102 is sent to that respective user device 102 and the security level of the call as a whole is sent to each user device participating in the call. Alternatively, an administrator amongst the plurality of user devices in a call may be informed of the security level of each user device 102, or all user devices 102 may be informed of the security level of each of the other user devices 102.

In one embodiment, the application server 108 analyzes the context of the user device 102 and the communication in real-time to assign a trust score to the communication in real-time, which is to say as the context of the user device 102 evolves during a call. The security level of each user device 102 in a call is updated accordingly. Changes in the security level for a particular user can trigger changes in the way calls are set up or the way call teardown is implemented.

The security level assessment may be in the form of an application running on a mobile phone or computer. The application on the device can compute the security level of the device and communicate it to the application server 108. The device may participate actively in the collection of assessment parameters, which may improve performance.

The application server 108 can be updated to the latest algorithms used to determine the level of security of each user, either automatically from a third party server or manually from an operator. The application server 108 may be complemented with hardware modules configured to decrypt the end to end voice stream coming from different mobile subscribers. This provides an application server 108 that offers secure voice service for critical communications. A similar implementation could be used for data sharing or the like, as the IMS core network 106 is a multimedia platform for audio, video, chat, file sharing, etc. The IMS core network 106 can also determine the various levels of security; however this may not be preferred since policies would need to be pushed to all the users creating unnecessary overhead in synchronizing the policies across all users.

The security of a user device 102 can change frequently over time; in particular in bring your own device (BYOD) environments where devices may be very different from one participant to another. Mobility also creates an extra challenge as the network infrastructure can change, for example between office Wi-Fi, airport Wi-Fi, a home 3G/4G network or a roaming 3G/4G network. Therefore, the security level can be different at any time depending on a combination of technical elements that define the context of the participant.

Parameters related to the environment and context of a user device 102 that may be used to determine its trust score and hence its security level include device and authentication parameters, location and network parameters and/or participant parameters.

Device and authentication parameters may include the role of a participant, for example the participant's level of access to sensitive information. They may also include the certification of the user device 102, for example, for standard VoLTE, a default restricted profile that indicates whether or not the mobile subscriber has access to the service, for VPN software that is installed, an indication of whether or not the user has the right to use a VPN to reach the corporate infrastructure, or other subscription levels. They may also include device characteristics such as the device manufacturer, platform version, processor type and/or M2M (Machine to machine) data information. M2M data information indicates whether or not the user device can send or receive data from other machines without human interaction. These parameters may also include the presence or absence of some certificates and/or applications and call logs present on the device. Device and authentication parameters may include input from any sensor available on the device (such as an audio, light, acceleration or speed sensor).

Location and network parameters may include the user location by the Global Positioning System (GPS) or by identifying the cell on the network to which the user device 102 is connected, as well as secondary networks such as Bluetooth, Wi-Fi, NFC connections and Bluetooth low-energy (BLE) beacons to which the user device 102 is connected in parallel to the cellular network. The user may also provide an evaluation of their environmental risk, for example whether they are talking from a public area, a private area, alone in the wild etc. These parameters may also include the actual security qualification of the network, which may be obtained by a technical assessment of network parameters. For example, the network may have no Internet Protocol Security (IPSEC) at all, or may only apply it to the control plane of the IMS core network 106, and as such have a lower security. In an LTE network infrastructure, the security level evaluation may depend first on how a user device 102 signals to the IMS core network 106 and what those signals are, and second on how the application server 108 talks to the IMS core network 106 to further determine the user security levels. The location and network parameters may also include whether the user is connected to a home network, whether the network is trusted by the service provider, and/or include information on the latest network attach, that is the last time the device 102 attached to the network 104, for example when the device 102 was last powered on. Information on the details of the attach procedure, defined by SIM card characteristics, may be included. The number of smartphones connected to the same cell in the network and/or the density of the cells can also be used. Knowing the user's location in a precise way and combining it with contextual data possibly from other users of the network, even anonymously, can help fine tuning the assessment of the security level. For instance, when a participant in a call is surrounded by people in a public environment, the risk of eavesdropping reduces the security level. Different variables from the participant's environment may be combined to further refine the security level assessment, for example using local weather, local twitter feeds, etc.

Participant parameters may include the participant availability (online, offline, auto-reply status, etc.), an agenda or calendar from the participant to give contextual information (e.g. travelling in China with a large number of meetings; possible inconsistencies may also be of interest), biometrics, PIN codes (also including the time since the PIN was last entered, which may be linked with heartbeat forced regular authentication modes. In such modes, the device is sent a latest heartbeat to verify its availability). Further participant parameters may include microphone and/or camera inputs from the user device 102. For example, an application running on the user device 102 may be capable of listening to the microphone without the user noticing it. These inputs may provide more contextual information to possibly identify inconsistencies with other context information that has been identified.

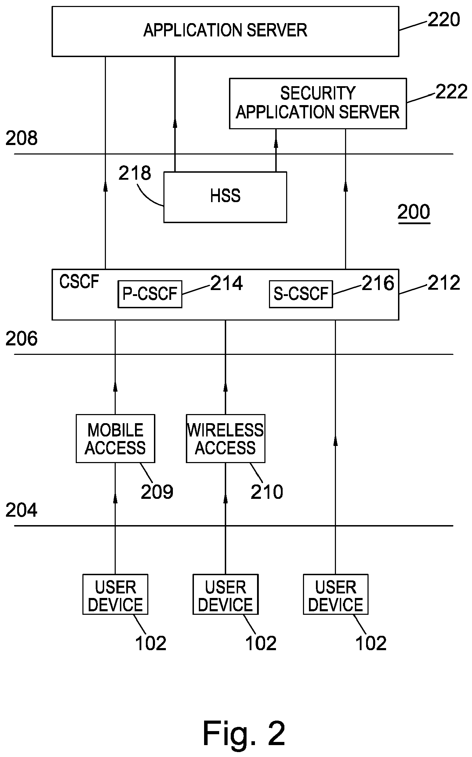

Figure 2 shows a data framework 200 for communications on the LTE network, similar to the system 100 shown in Figure 1. The framework 200 comprises a transport layer 204, an IMS layer 206 and an application layer 208.

A user device 102 can connect to the IMS layer 206 in a number of ways. For example, a user device 102 may access the IMS layer 206 via the transport layer 204 via a mobile access module 209 (for example, using GSM or GPRS), via a wireless access module 210 (for example, using WLAN or WiMAX), or via a fixed access module (for example, a DSL or cable modem or an Ethernet cord). Alternatively, a user device 102 may access the IMS layer 206 directly using standard IP and by running session initiation protocol (SIP) user agents, without use of the transport layer 204.

The IMS layer 206 comprises a Call Session Control Function (CSCF) 212 and a home subscriber server (HSS) 218. The CSCF 212 comprises a number of SIP servers or proxies which are used to process SIP signalling packets in the IMS layer 206. The CSCF 212 comprises a Proxy-CSCF (P-CSCF) 214 and a Serving-CSCF (S-CSCF) 216. The P-CSCF may use a Session Border Controller (SBC) to exert control over signalling and media flows. In a possible embodiment for VoLTE, there is a control plane provided by the IMS layer 212 with the P-CSCF 214 and the S-CSCF 216 acting as a SIP server (SIP registration). The HSS 218 comprises a database that contains all necessary subscription-related information, such as subscriber profiles. The HSS 218 is interrogated by the IMS platform when the user device 102 connects to the IMS service (authentication).

The application layer 208 comprises an application server 220 and a security application server 222. The application server 220 provides the service, in some embodiments, the secure voice service. The application server 220 uses SIP to communicate with the S-CSCF 216, and uses a Diameter interface with the HSS 218. The security application server 222 acts as a dedicated extra layer of security, interacting with the S-CSCF 216 and with the HSS 218 enabling the smart setting of one-to-one and one-to-many secure voice call qualifications. To achieve this, the security application server 222 receives the input from each user. To this end, dedicated security functions may be mapped to the IMS layer 206 as extensions of the current protocol interfaces, such as the SIP protocol, to provide additional security intelligence and security features to the regular standard network environment.

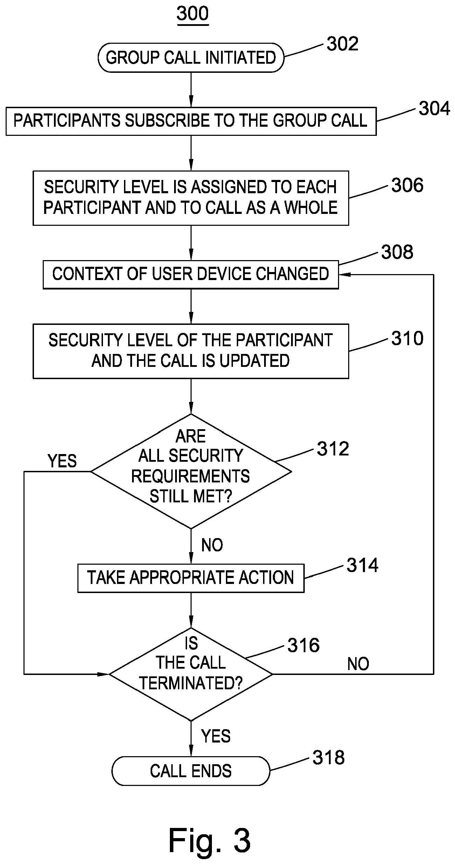

Figure 3 illustrates a method 300 in which the security level of a group call is determined dynamically by checking a number of parameters corresponding to a user device 102 at any given time. In the method 300, the security level of each user device 102 is constantly evaluated in the background by the application server 108, so the conversation security evolves as a participant changes context.

A group call is initiated at step 302. The group call may be initiated by a participant in the call via his or her user device 102. The participant that initiates the call may be an administrator of the call, who is enabled to remove individual participants and terminate the call as a whole. Alternatively, there may be no call administrator, and these functions are performed automatically by the application server 108 without user intervention.

Participants subscribe to the voice call at step 304. Participants subscribe using their user devices 102. A security level is assigned to each user device 102 by the application server 102 at step 306. The application server analyses context data relating to each user device 102 and assigns a security level accordingly, as discussed above.

At step 308, the context of a user device 102 changes. The application server 108 is notified by the user device 102 when the change occurs. This may be due to a change of location, change of network to which they are connected, or any change of the parameters that are discussed above. At step 310, the application server 108 updates the security level of that user device 102 based on the new context information.

A determination is made as to whether or not the requisite security level is met for all user devices 102 in light of the updated security level of the one user device 102, at step 312. If not, an appropriate action is taken at step 314.

If all requirements are met regarding the security levels of the user device 102 in the group call, or once the appropriate action is taken, then the application server 108 determines whether the call has been terminated, at step 316. The call may be terminated by one or more of the participants hanging up, or as a result of the appropriate action at step 314. If the call has been terminated, the call ends at step 318. If the call has not been terminated, the process loops back to step 308 and the application server 108 monitors for any context changes of the user devices 102 as the call continues.

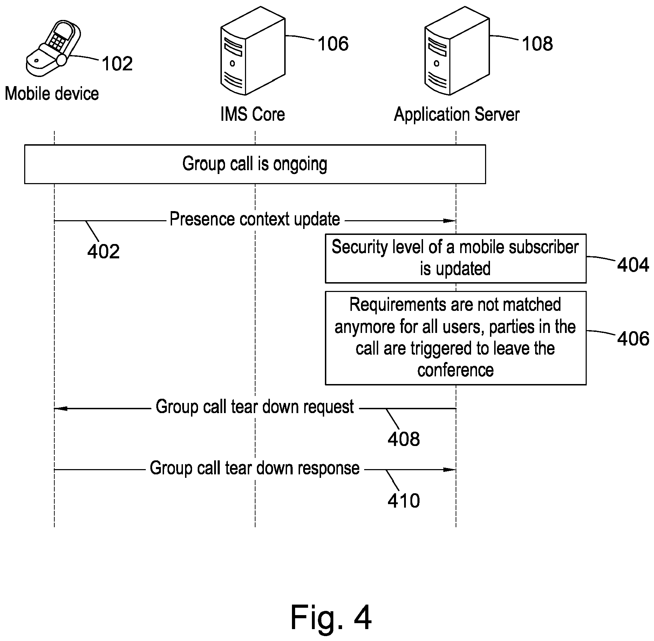

Figure 4 illustrates an example of the evolution of a group call in line with the method of Figure 3. A group call is in progress. At step 402, a user device 102 sends its context information to the application server 108 via the IMS core network 106. At step 404, the application server 108 updates the security level of the user device 102 based on the change in context. At step 406, the application server determines that the security requirements for the call are no longer met. A group call teardown request is issued by the application server at step 408 in order to terminate the call and causes the user device 102 to terminate the call. At step 410, the user 102 sends a response confirming that it has terminated the call. The user device 102 is informed to shut down the call and stop sending the media stream.

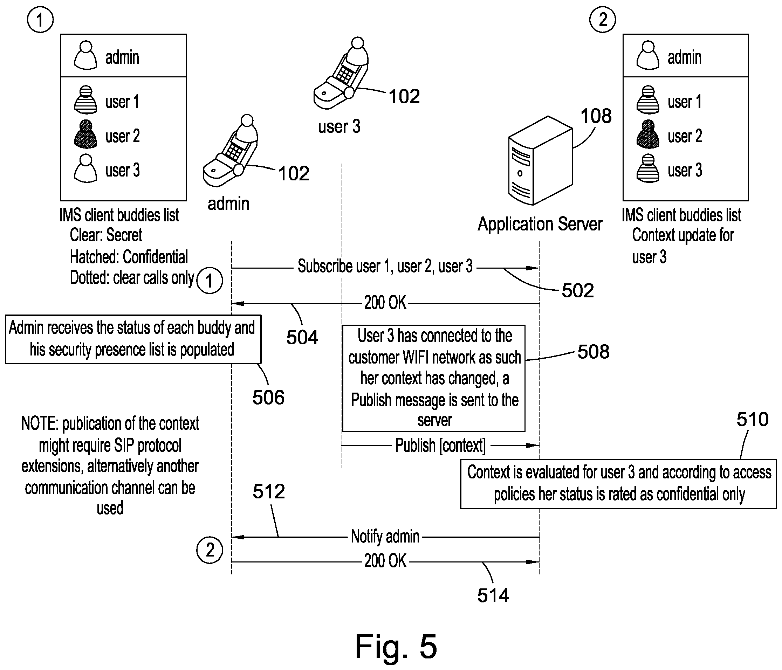

Figure 5 illustrates another example of the evolution of a group call. The call is between four participants: an administrator, user 1, user 2 and user 3. The figure shows a "buddies list" of the participants in the call and how their respective security levels change during the call.

The administrator may initiate the call. User 1, user 2 and user 3 subscribe to the call at step 502 via individual subscription requests. At step 504, a message is sent, for example code "200 OK" for SIP, indicating that the subscription request was successful. The security level of each participant and of the call as a whole is determined by the application server 108 based on the context of each participant at the beginning of the call. In this instance, the administrator and user 3 have a high level of security (indicated in the left-hand buddy list by a blank avatar), user 1 has an intermediate level of security (indicated by a hatched avatar) and user 2 has a low level of security (indicated by a filled avatar). The administrator is informed of the security level of each of the other participants at step 506. The security level of the call itself and/or each user device 102 can be visible to all participants in order that that they behave in line with the correct security policy, or visible to the administrator only. If the security level of the call changes during a conversation, an alarm may be generated, for example a sound alert, a message interrupting the conversation, device blinking etc.

At step 508, user 3 transfers from a secure mobile network to a customer Wi-Fi network, for example in a store. The application server 108 is informed of the network change and reassesses user 3's security level at step 510. User 3's security level is downgraded to intermediate, and the administrator is notified of this by the IMS layer 106 at step 512. In this case, the call is either downgraded to a lower level or is dropped. This is indicated in Figure 5 by the change of the avatar of user 3 from a blank avatar in the left-hand buddy list to a hatched avatar in the right-hand buddy list.

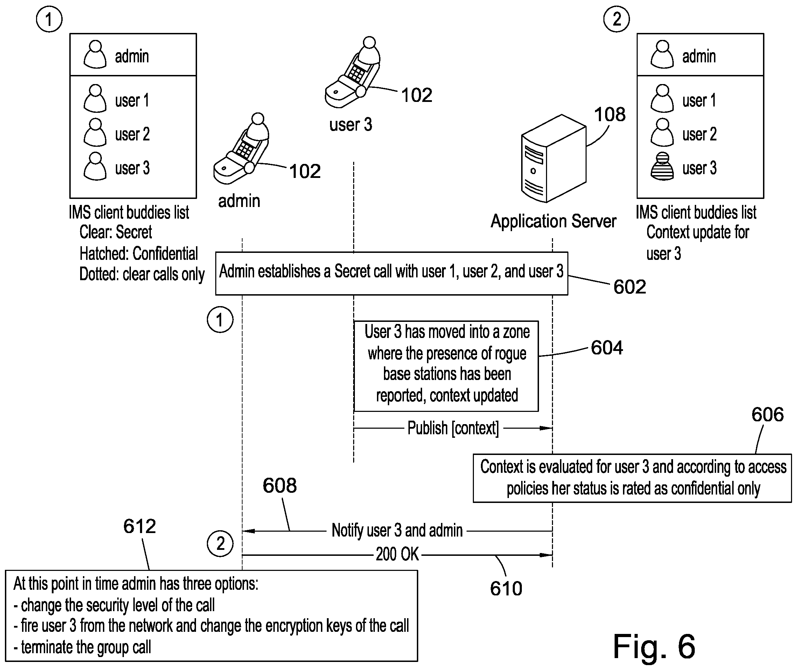

Figure 6 illustrates an example of the evolution of another group call between the four users. The call administrator establishes the call at step 602. In this instance, all users are assigned a high level of security by the application server 108 at the beginning of the call (indicated in the left-hand buddy list by a blank avatar). At step 604, user 3 moves into a zone where the presence of at least one rogue base station has been reported. The application server 108 is informed of the zone change and reassesses user 3's security level at step 606. User 3's security level is downgraded to intermediate. This is indicated in by the change of the avatar of user 3 from a blank avatar in the left-hand buddy list to a hatched avatar in the right-hand buddy list. Upon the reception of notification from the application server 108, the IMS layer 106 notifies user and the administrator about the status change, at step 608. This may be, for example, via a sound alert, a message interrupting the conversation, a user device 102 blinking etc. At step 610, a message is sent indicating the successful status notification, for example "200 OK" as described above.

At step 612, the administrator may proceed in a number of ways to ensure the security of the call. The administrator may rate the call itself at an intermediate level of security through an appropriate user interface. The administrator can use several device types (PC, tablet, etc.) and the specific user interface will depend on the operating system and platform of the relevant device. In some embodiments, an application running on an administrator's device may have a menu to rate its own security level. This could alternatively be enabled via an automatic switch in the application. In this case, each participant would be notified of the change in security level of the call. Alternatively, the administrator could remove user 3 from the call and trigger a key exchange to renegotiate the keys of the call. A specific negotiation algorithm is not required, and may vary from one embodiment to the next. Alternatively, the administrator could terminate the group call.

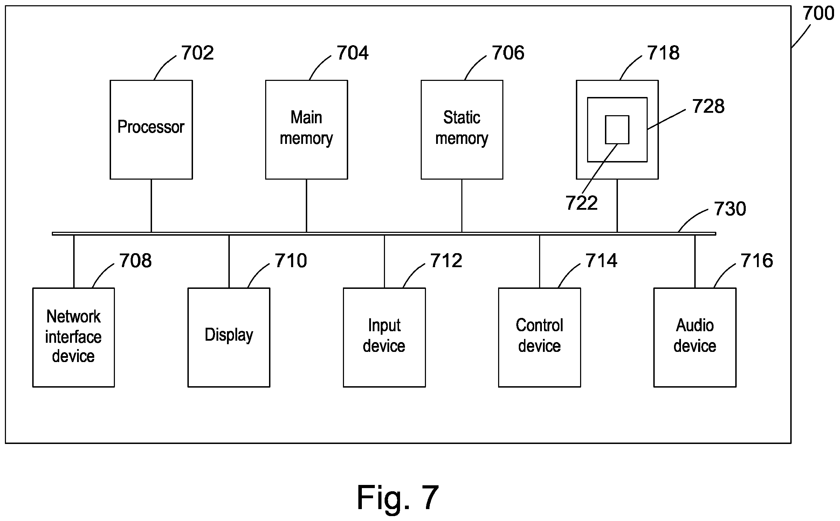

Figure 7 illustrates a block diagram of one implementation of a computing device 700 within which a set of instructions, for causing the computing device to perform any one or more of the methodologies discussed herein, may be executed. In alternative implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term "computing device" shall also be taken to include any collection of machines (e.g., computers) that individually or jointly execute a set (or multiple sets) of instructions to perform any one or more of the methodologies discussed herein.

The example computing device 700 includes a processing device 702, a main memory 704 (e.g., read-only memory (ROM), flash memory, dynamic random access memory (DRAM) such as synchronous DRAM (SDRAM) or Rambus DRAM (RDRAM), etc.), a static memory 706 (e.g., flash memory, static random access memory (SRAM), etc.), and a secondary memory (e.g., a data storage device 718), which communicate with each other via a bus 730.

Processing device 702 represents one or more general-purpose processors such as a microprocessor, central processing unit, or the like. More particularly, the processing device 702 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processing device 702 may also be one or more special-purpose processing devices such as an application specific integrated circuit (ASIC), a field programmable gate array (FPGA), a digital signal processor (DSP), network processor, or the like. Processing device 702 is configured to execute the processing logic (instructions 722) for performing the operations and steps discussed herein.

The computing device 700 may further include a network interface device 708. The computing device 700 also may include a video display unit 710 (e.g., a liquid crystal display (LCD) or a cathode ray tube (CRT)), an alphanumeric input device 712 (e.g., a keyboard or touchscreen), a cursor control device 714 (e.g., a mouse or touchscreen), and an audio device 716 (e.g., a speaker).

The data storage device 718 may include one or more machine-readable storage media (or more specifically one or more non-transitory computer-readable storage media) 728 on which is stored one or more sets of instructions 722 embodying any one or more of the methodologies or functions described herein. The instructions 722 may also reside, completely or at least partially, within the main memory 704 and/or within the processing device 702 during execution thereof by the computer system 700, the main memory 704 and the processing device 702 also constituting computer-readable storage media.

The various methods described above may be implemented by a computer program. The computer program may include computer code arranged to instruct a computer to perform the functions of one or more of the various methods described above. The computer program and/or the code for performing such methods may be provided to an apparatus, such as a computer, on one or more computer readable media or, more generally, a computer program product. The computer readable media may be transitory or non-transitory. The one or more computer readable media could be, for example, an electronic, magnetic, optical, electromagnetic, infrared, or semiconductor system, or a propagation medium for data transmission, for example for downloading the code over the Internet. Alternatively, the one or more computer readable media could take the form of one or more physical computer readable media such as semiconductor or solid state memory, magnetic tape, a removable computer diskette, a random access memory (RAM), a read-only memory (ROM), a rigid magnetic disc, and an optical disk, such as a CD-ROM, CD-R/W or DVD.

In an implementation, the modules, components and other features described can be implemented as discrete components or integrated in the functionality of hardware components such as ASICS, FPGAs, DSPs or similar devices as part of an individualization server.

A "hardware component" is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase "hardware component" should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

Unless specifically stated otherwise, as apparent from the following discussion, it is appreciated that throughout the description, discussions utilizing terms such as "receiving", "determining", "comparing", "enabling", "maintaining", "identifying", "analysing", "sending" or the like, refer to the actions and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

The following embodiments are disclosed, for example:
1. A method of monitoring security of a communication on a network, the method comprising:
   receiving contextual information regarding each of a plurality of user devices, each user device associated with a respective participant in the communication;
   analysing the received information to define a security level for each user device of the plurality of user devices;
   comparing the defined security level to a threshold security level; and performing an action in response to determining that the defined security level of one or more user devices of the plurality of user devices does not meet the threshold security level.
   The method steps may be performed at an application server, or at another location such as one or more of the user devices. Alternatively, one or more of the method steps may be performed at an application server with others performed at one or more of the user devices.
2. The method of item 1, wherein receiving information comprises repeatedly receiving information during the duration of the communication.
3. The method of item 2 wherein the received information is analysed each time it is received.
4. The method of any preceding item, wherein information describing the context of a user device comprises at least one of device information, authentication information, location information, network information and participant information.
   For example, the information may include the role of a participant, the certification of the user device, device characteristics, the presence or absence of some certificates and/or applications and call logs present on the device, the user location, secondary networks such as Bluetooth, Wi-Fi, NFC connections and Bluetooth low-energy (BLE) beacons to which the user device is connected in parallel to the network, a user evaluation of their environmental risk, the actual security qualification of the network, whether the user is connected to a home network, whether the network is trusted by the service provider, the number of smartphones connected to the same cell in the network and/or the density of the cells can also be used, local weather, local twitter feeds, the participant availability, an agenda or calendar from the participant to give contextual information, biometrics, PIN codes, microphone and/or camera inputs from the user device, or other sensor inputs such as a light sensor, gyroscope, proximity or acceleration sensor, location services such as GPS or cellular network position information, or any suitable sensing information.
5. The method of any preceding item, wherein the threshold security level comprises a boundary between a first discrete security level and a second discrete security level adjacent the first discrete security level.
6. The method of any preceding item, wherein performing an action comprises terminating the communication.
7. The method of any of items 1 to 6, wherein performing an action comprises assigning a security level to the communication.
8. The method of item 7, wherein the assigned security level is based on the security level of the user device having the lowest security level of the plurality of user devices.
9. The method of item 7 or 8, further comprising sending a notification of the assigned security level to one or more of the plurality of user devices.
   The notification of the assigned security level may be sent to each of the plurality of user devices.
10. The method of any of items 1 to 5, wherein performing an action comprises sending a notification to one or more participants of the communication that the security level of the one or more user devices is below the threshold security level.
11. The method of item 10, wherein the notification comprises at least one of a sound alert, a visual alert and a message interrupting the communication.
12. The method of item 10 or 11, wherein the notification comprises an identification of the one or more user devices.
13. The method of any of items 10 to 12, further comprising enabling the one or more participants to terminate the communication by disconnecting each of the plurality of user devices.
14. The method of any of items 10 to 13, further comprising enabling the one or more participants to assign a security level to the communication.
15. The method of any of items 10 to 14, further comprising enabling the one or more participants to remove the one or more user devices from the communication.
16. The method of item 15, further comprising enabling the one or more participants to trigger a key exchange with the remaining user devices in the communication.
17. The method of any preceding item, wherein the communication involves three or more participants.
18. The method of any preceding item, wherein the communication is a VoLTE communication.
19. A tangible, non-transitory computer readable medium comprising computer code that, when executed by a computing device, causes the computing device to perform the method of any of items 1 to 18.

Also disclosed are the following embodiments:
1. A system for monitoring security of a communication on a network, the system comprising a processor configured to:
   receive contextual information regarding each of a plurality of user devices, each user device associated with a respective participant in the communication;
   analyse the received information to define a security level for each user device of the plurality of user devices;
   compare the defined security level to a threshold security level; and perform an action in response to determining that the defined security level of one or more user devices of the plurality of user devices does not meet the threshold security level.
   The processor may be located at an application server, or at one or more of the user devices. Alternatively, the system may be distributed between an application server and one or more of the user devices such that one or more of the functions are performed at the application server, with others performed at one or more of the user devices.
2. The system of item 1, wherein the processor is configured to repeatedly receive information during the duration of the communication.
3. The system of item 2, wherein the processor is configured to analyse the received information each time it is received.
4. The system of any preceding item, wherein information describing the context of a user device comprises at least one of device information, authentication information, location information, network information and participant information.
   For example, the information may include the role of a participant, the certification of the user device, device characteristics, the presence or absence of some certificates and/or applications and call logs present on the device, the user location, secondary networks such as Bluetooth, Wi-Fi, NFC connections and Bluetooth low-energy (BLE) beacons to which the user device is connected in parallel to the network, a user evaluation of their environmental risk, the actual security qualification of the network, whether the user is connected to a home network, whether the network is trusted by the service provider, the number of smartphones connected to the same cell in the network and/or the density of the cells can also be used, local weather, local twitter feeds, the participant availability, an agenda or calendar from the participant to give contextual information, biometrics, PIN codes, microphone and/or camera inputs from the user device, or other sensor inputs such as a light sensor, gyroscope, proximity sensor or any suitable sensing information.
5. The system of any preceding item, wherein the threshold security level comprises a boundary between a first discrete security level and a second discrete security level adjacent the first discrete security level.
6. The system of any preceding item, wherein the processor is configured to terminate the communication in response to determining that the defined security level of one or more user devices of the plurality of user devices does not meet the threshold security level.
7. The system of any of items 1 to 6, wherein the processor is configured to assign a security level to the communication in response to determining that the defined security level of one or more user devices of the plurality of user devices does not meet the threshold security level.
8. The system of item 7, wherein the assigned security level is based on the security level of the user device having the lowest security level of the plurality of user devices.
9. The system of item 7 or 8, wherein the processor is configured to send a notification of the assigned security level to one or more of the plurality of user devices.
   The notification of the assigned security level may be sent to each of the plurality of user devices.
10. The system of any of items 1 to 5, wherein the processor is configured to send a notification to one or more participants of the communication that the security level of the one or more user devices is below the threshold security level in response to determining that the defined security level of one or more user devices of the plurality of user devices does not meet the threshold security level.
11. The system of item 10, wherein the notification comprises at least one of a sound alert, a visual alert and a message interrupting the communication.
12. The system of item 10 or 11, wherein the notification comprises an identification of the one or more user devices.
13. The system of any of items 10 to 12, wherein the processor is configured to enable the one or more participants to terminate the communication by disconnecting each of the plurality of user devices.
14. The system of any of items 10 to 13, wherein the processor is configured to enable the one or more participants to assign a security level to the communication.
15. The system of any of items 10 to 14, wherein the processor is configured to enable the one or more participants to remove the one or more user devices from the communication.
16. The system of item 15, wherein the processor is configured to enable the one or more participants to trigger a key exchange with the remaining user devices in the communication.
17. The system of any preceding item, wherein the communication involves three or more participants.
18. The system of any preceding item, wherein the communication is a VoLTE communication.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A method of monitoring security of a communication on a network, the method comprising:
receiving contextual information regarding each of a plurality of user devices, each user device associated with a respective participant in the communication;
analysing the received information to define a security level for each user device of the plurality of user devices;
comparing the defined security level to a threshold security level; and
performing an action in response to determining that the defined security level of one or more user devices of the plurality of user devices does not meet the threshold security level.

2. The method of claim 1, wherein receiving information comprises repeatedly receiving information during the duration of the communication.

3. The method of claim 2 wherein the received information is analysed each time it is received.

4. The method of any preceding claim, wherein information describing the context of a user device comprises at least one of device information, authentication information, location information, network information and participant information.

5. The method of any preceding claim, wherein the threshold security level comprises a boundary between a first discrete security level and a second discrete security level adjacent the first discrete security level.

6. The method of any preceding claim, wherein performing an action comprises terminating the communication.

7. The method of any of claims 1 to 6, wherein performing an action comprises assigning a security level to the communication.

8. The method of claim 7, wherein the assigned security level is based on the security level of the user device having the lowest security level of the plurality of user devices.

9. The method of any of claims 1 to 8, wherein performing an action comprises sending a notification to one or more participants of the communication that the security level of the one or more user devices is below the threshold security level.

10. The method of claim 9, wherein the notification comprises at least one of a sound alert, a visual alert and a message interrupting the communication.

11. The method of claim 9 or 10, further comprising enabling the one or more participants to terminate the communication by disconnecting each of the plurality of user devices.

12. The method of any of claims 9 to 11, further comprising enabling the one or more participants to remove the one or more user devices from the communication.

13. The method of any preceding claim, wherein the communication involves three or more participants.

14. The method of any preceding claim, wherein the communication is a Voice over Long-Term Evolution "VoLTE" communication.

15. A tangible, non-transitory computer readable medium comprising computer code that, when executed on a computing device, causes the computing device to perform the method of any of claims 1 to 14.
